# EUROPEAN PATENT APPLICATION

(11) **EP 2 662 284 A2**
(43) Date of publication of application: **13.11.2013**
(21) Application number: 13163796.9
(22) Date of filing: 15.04.2013
(51) Int. Cl.: B64D 15/16

(54) **Ice protection for aircraft using electroactive polymer surfaces**

(30) Priority: 08.05.2012 US 201213466912
(71) Applicant: The Boeing Company, Chicago, IL 60606-2016 (US)
(72) Inventor: Hoffenberg, Robert, Seattle, WA Washington 98124-2207 (US)
(74) Representative: Witte, Weller & Partner

(57) **Abstract**

An electro-active polymer (EAP) surface (10) having a plurality of actuators (20) adapted to prevent the formation of ice on an external surface (230), such as a leading edge of an aircraft (100). The EAP surface (10) may also be adapted to remove ice formed on the external surface (260). The actuators of the EAP surface (10) may be oscillated to prevent and/or remove ice from the surface of an aircraft (100). A signal generator (30) may be used to individually oscillate the actuators (20) in a first mode to prevent the formation of ice(230) and a second mode to break up ice formed on the EAP surface (10). The signal generator (30) may oscillate all of the actuators (20) at the same frequency, may individually oscillate the actuators (20) to form a pattern on the EAP surface (10), or may individually oscillate the actuators (20) to form a wave along the EAP surface (10). The actuators (20) may be dimple actuators, wrinkle actuators, and/or bump actuators.

## Description

### BACKGROUND

### Field of the Disclosure

The embodiments described herein relate to a system for the prevention of the formation of ice and/or the removal of ice from an external surface of a vehicle, such as an aircraft, or another structure using an electro-active polymer (EAP).

### Description of the Related Art

The formation of ice on an external surface of a vehicle or another structure can be problematic. As an example, the formation of ice on an external surface of an aircraft, such as the leading edge of a wing or a tail is less than desirable.

There are a number of systems that have been used in an attempt to remove ice from external surfaces, such the leading edges, of aircraft. One type of system is a deicing boot, which is a thick rubber membrane that is installed on the leading edges of a wing. When ice forms on the leading edges, a pneumatic system fills the deicing boot with compressed air, causing the deicing boot to expand and break up the ice. The airflow past the leading edges then removes the ice from the wings. Once the ice has been removed, the deicing boots are deflated until needed again. The rubber membrane may be subject to ultraviolet degradation. Deicing boots are not practical on transonic aircraft because of the potential leaks, limited durability, and variations in surface contour.

Another existing system used to remove ice from the leading edges of an aircraft is a heater system. This system uses heat to melt the ice from the leading edges of the aircraft. Heater systems use large amounts of energy, which limits ice protection to only the most critical areas. Another problem associated with conventional thermal systems is run-back ice, formed if the melted ice re-freezes on the aircraft.

Shakers or thumpers are other systems used to remove ice from the leading edges of an aircraft. Shakers and thumpers are only used intermittently and may have less than desired results in removing all of the ice accumulated on the leading edges of an aircraft.

The preceding described methods and systems for the prevention and/or removal of ice from an aircraft have less than desired results.

### SUMMARY

The present disclosure is directed to providing a system that consumes a low amount of energy to prevent and/or remove ice from external surfaces, such as leading edges, of an aircraft and potentially overcome some of the problems and disadvantages discussed above.

One embodiment of the present disclosure is a method of protecting an external surface from ice, the method comprising preventing the formation of ice on an external surface by oscillating at least a portion of a plurality of actuators on an electro-active polymer (EAP) surface. The method may include applying the EAP surface to an external surface. The method may include detecting that conditions exists that are conducive to the formation of ice on the external surface. The method may include sending a signal to a signal generator to oscillate at least a portion of the plurality of actuators based on detecting conditions conducive to the formation of ice on the external surface. The external surface may be an external surface of an aircraft, such as the leading edge of the aircraft. The method may include oscillating each of the plurality of actuators at the same frequency to prevent the formation of ice. The plurality of actuators may be oscillated at frequencies on the order of about 1 Hz to more than 1 kHz. The actuators may be dimple actuators, bump actuators, and/or wrinkle actuators. The method may include individually oscillating a portion of the plurality of actuators to form a pattern on the external surface to prevent the formation of ice on the external surface. The method may include individually oscillating the plurality of actuators to form a wave on the external surface to prevent the formation of ice on the external surface.

The method may further include detecting the formation of ice on the external surface, sending a signal to a signal generator based on the detection of the formation of ice, and oscillating at least a portion of the actuators to remove the formation of ice from the external surface. The method may include oscillating each of the plurality of actuators at the same frequency to remove the formation of ice from the external surface. The method may include individually oscillating a portion of the plurality of actuators to form a pattern on the external surface to remove the formation of ice from the external surface. The method may include individually oscillating the plurality of actuators to form a wave on the external surface to remove the formation of ice from the external surface.

One embodiment of the present disclosure is an ice protection system for an external surface comprising an EAP surface having a plurality of actuators and a signal generator connected to the EAP surface. The signal generator may be adapted to individually oscillate the actuators. The EAP surface may be installed on an external surface of a vehicle, such as on a leading edge of the aircraft. The actuators may be dimple actuators, bump actuators, and/or wrinkle actuators. The signal generator may be adapted to oscillate the plurality of dimple actuators in a first mode to prevent the formation of ice on an external surface of the aircraft and to oscillate the plurality of dimple actuators in a second mode to remove ice formed on an external surface of an aircraft. The first mode of the signal generator may oscillate each of the actuators at the same frequency, may individually oscillate a portion of the actuators to form a pattern, and/or may oscillate the actuators to form a wave. The second mode of the signal generator may oscillate each of the actuators at the same frequency, may individually oscillate a portion of the actuators to form a pattern, and/or may oscillate the actuators to form a wave. The system may include a sensor adapted to detect the formation of ice on an external surface of an aircraft.

### BRIEF DESCRIPTION OF THE DRAWINGS

FIG. 1 shows EAP on an exterior surface of a vehicle.
FIG. 2 is a perspective view of an EAP surface that may be used to prevent the formation of ice and/or remove ice on an external surface.
FIG. 3 is a partial perspective view of an embodiment of an EAP surface with the first row of actuators being actuated as the start of a wave across the EAP surface.
FIG. 4 is a partial perspective view of the embodiment of the EAP surface of FIG. 3 with the second row of actuators being actuated as part of a wave across the EAP surface.
FIG. 5 is a partial perspective view of an embodiment of an EAP surface with the actuators being actuated in a pattern on the EAP surface.
FIG. 6 is a partial perspective view of an embodiment of an EAP surface with wrinkle or line actuators.
FIG. 7 is a block diagram of an aircraft.
FIG. 8 is a flow diagram of an ice protection method.

While the disclosure is susceptible to various modifications and alternative forms, specific embodiments have been shown by way of example in the drawings and will be described in detail herein. However, it should be understood that the disclosure is not intended to be limited to the particular forms disclosed. Rather, the intention is to cover all modifications, equivalents and alternatives falling within the scope of the invention as defined by the appended claims.

### DETAILED DESCRIPTION

The present application involves the use of electro-active polymers (EAPs), which are a category of materials that are well-known in the art. The EAP surface comprises a compliant capacitor that includes an elastomer dielectric film sandwiched between two compliant electrodes. In operation, an electric field is applied to the compliant electrodes creating an electrostatic pressure, also referred to as Maxwell Stress, compressing the elastomer film. The compression of the elastomer film results in an elongation of the elastomer film because of incompressibility of the elastomer film. An application of an electric field between two oppositely charged electrodes causes a mechanical compression between the two electrodes. Likewise, an application of an electric field between two like charged electrodes causes a mechanical expansion between the two electrodes.

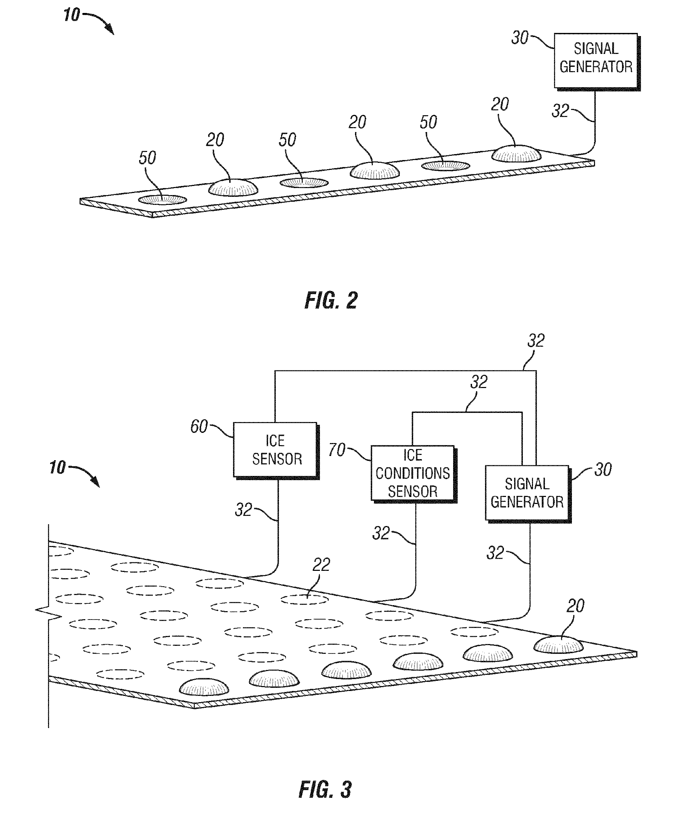

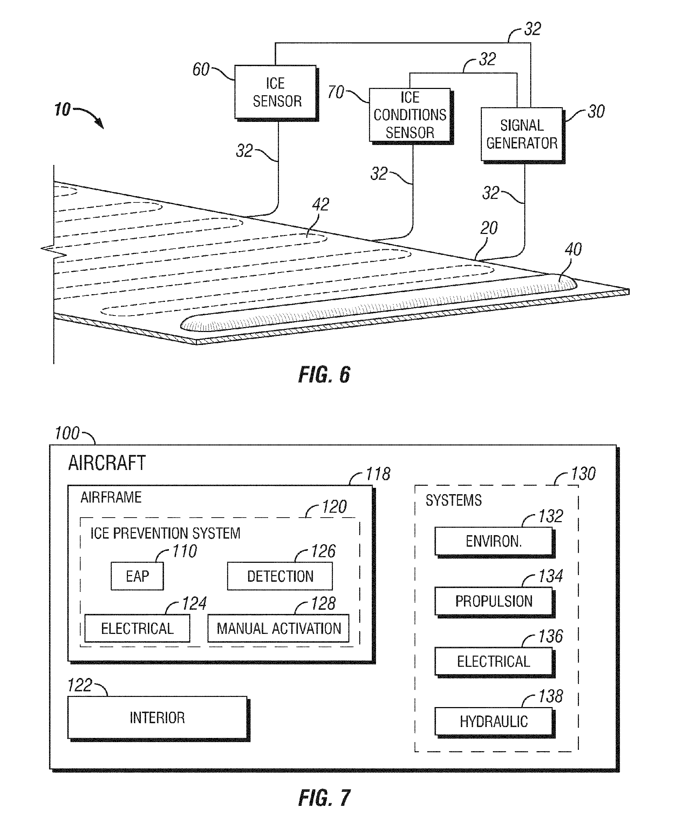

The EAP surface may be adapted to create a dimple or depression actuator in the elastomer film upon an application of an electric field to the electrodes. Depending on the configuration of the elastomer film and the electrodes, the elastomer film buckles, bends, or elongates upon the application of an electric field. The electric field may be applied from a signal generator. However, various means may be used to apply an electric field to the elastomer field as would be appreciated by one of ordinary skill in the art having the benefit of this disclosure. Clamps may secure the elastomer film in place and define the dimensions of the actuator. Because the periphery of the actuator is fixed, no in-plane movement of the elastomer film can occur. Thus, the mechanical force due to the electrostatic pressure causes an out-of-plane movement, such as a depression or dimple as shown in the actuator 50 of FIG. 2. In other examples, described in more detail below, the mechanical force of the elastomer film can create other out-of-plane movements, such as a bump or protrusion, as shown in the bump actuator 20 of FIG. 2 - FIG. 5, or a wrinkle or line as shown in the wrinkle actuator 40 of FIG. 6. Once the application of the electric field is removed, the elastomer film moves back to the initial in-plane flat position. The application of an electric field at a frequency can cause an actuator to rapidly oscillate between its actuated and non-actuated states.

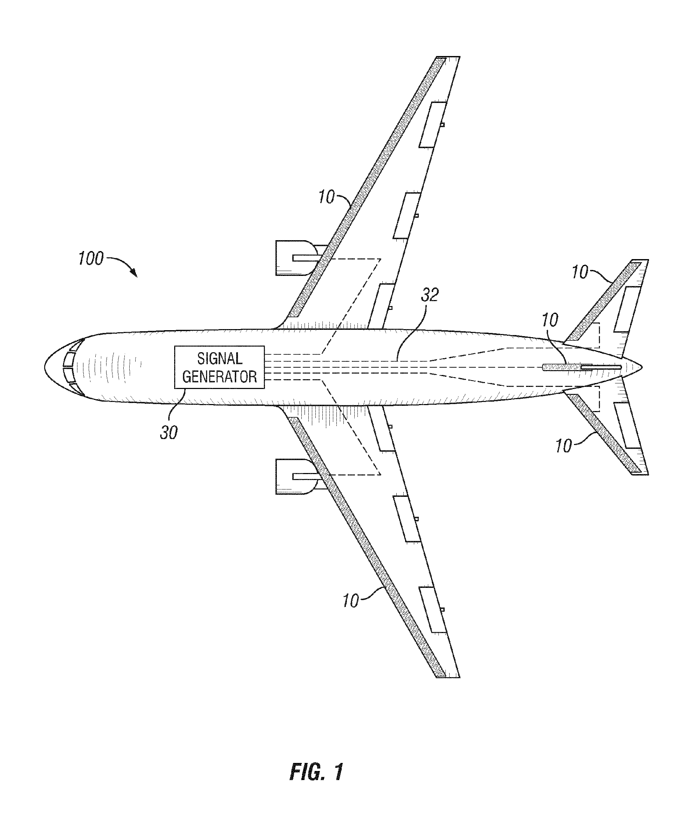

FIG. 1 shows one embodiment of the application of EAP surfaces 10 on selected exterior surfaces of a vehicle. In the embodiment illustrated in FIG. 1, the vehicle comprises an aircraft 100, and the selected exterior surfaces comprise the leading edges of the wings and tail of the aircraft. In other embodiments, the EAP surfaces 10 may be applied to various other external surfaces to prevent the formation of ice on the external surface or to remove ice from the external surface. For example, in some embodiments, EAP surfaces 10 may be applied to a wide variety of other vehicles, such as helicopters, unmanned aerial vehicles (UAVs), ships, trains, automobiles, etc. In other embodiments, EAP surfaces 10 may be applied to any suitable exterior surface on which the removal and/or prevention of ice may be beneficial, such as, for example, a roof, staircase, sidewalk, or road.

Referring again to the embodiment shown in FIG. 1, a signal generator 30 is connected to the EAP surfaces via lines 32. A single signal generator 30 is shown for illustrative purposes only. Multiple signal generators and various configurations connecting the signal generators to the actuators of the EAP surfaces 10 may be used as would be appreciated by one of ordinary skill in the art having the benefit of this disclosure. The EAP surfaces 10 may be applied to any desired surface on the aircraft 100, such as the leading edges of each wing, empennage, etc. The EAP surface 10 may comprise a film or skin layer applied to the surface of the leading edges of the aircraft 100. In some embodiments, the EAP surface 10 may have a thickness of about 1 millimeter.

The signal generator 30 is preferably adapted to individually control the oscillation of each actuator 20 on the EAP surfaces 10. The signal generator 30 may apply a time-varying current to actuate the actuators 20 of the EAP surface 10. The signal generator 30 may be adapted to actuate the actuators 20 in a first mode to prevent the accumulation of ice on the leading edges of the aircraft 100. The first mode may comprise applying an electrical pulse at a frequency on the order of 1 Hz to more than one 1 kHz. The electrical pulse may be used to oscillate the actuators 20 of the EAP surface 10. The first mode may be activated upon the detection of any atmospheric conditions likely to lead to the formation of ice upon the leading edges of the aircraft 100. The signal generator 30 may be adapted to actuate the actuators 20 in a second mode to remove ice from the EAP surface 10. The second mode may comprise oscillating the actuators 20 of the EAP surface 10 at a different frequency than the first mode or in a different geometrical pattern than the first mode, to break the bond between the ice and the leading edge of the aircraft 100.

FIG. 2 shows one embodiment of an EAP surface 10 with all of the actuators 20, 50 in the actuated position. The signal generator 30 is connected to the actuators 20, 50 of the EAP surface 10 via connection 32. The signal generator 30 may oscillate each of the actuators 20, 50 of the EAP surface 10 at the same frequency so that all of the actuators 20, 50 are actuated at the same time to prevent the formation of ice on an external surface of an aircraft and/or to remove ice that has formed on the external surface of an aircraft. Some of the actuators 50 may be depression or dimple actuators and some of the actuators 20 may be bump or protrusion actuators.

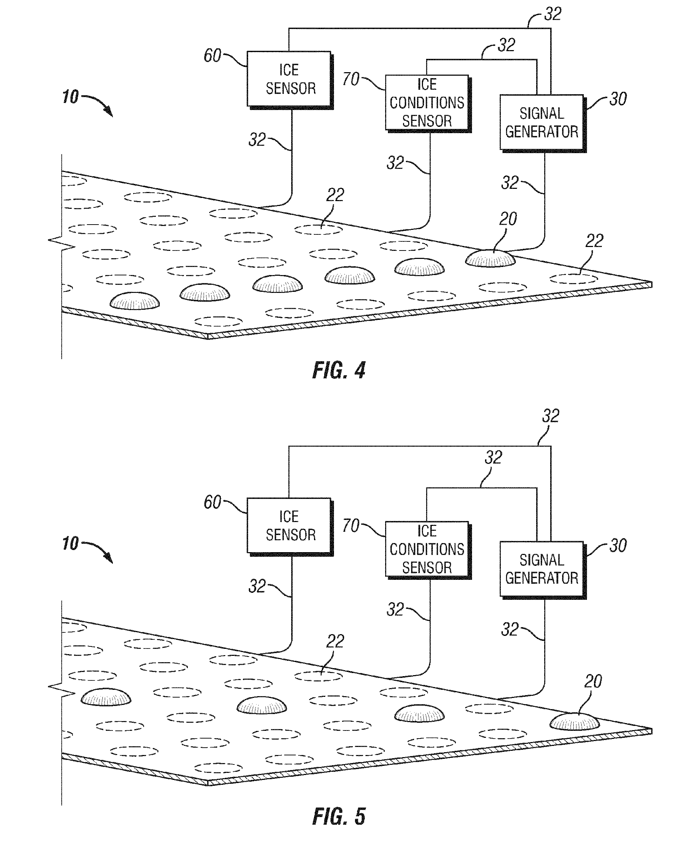

FIG. 3 and FIG. 4 show one embodiment of an EAP surface 10 with the actuators 20 being actuated by a signal generator 30 to create a wave that moves along the EAP surface 10. The signal generator 30 can actuate the actuators 20 to create a standing wave or a moving wave on the EAP surface 10. FIG. 3 shows a first row of actuators 20 in the actuated position while the remainder of the non-actuated actuators 22 (shown by dashed lines) being in-plane or flat along the EAP surface 10. FIG. 4 shows the next row of actuators 20 being in the actuated position while the remainder of the non-actuated actuators 22 (including the first row that was previously actuated) being in-plane or flat along the EAP surface 10. The signal generator 30 will continue to actuate each row in succession until the wave has traveled the length of the EAP surface 10. The use of an actuator wave along the EAP surface 10 may be beneficial to prevent the formation of ice and/or removal of ice on the EAP surface 10. The signal generator 30 may be adapted to actuate the actuators 20 to create waves of various shapes to prevent and/or remove ice formed on the EAP surface 10 as would be appreciated by one of ordinary skill in the art having the benefit of this disclosure.

FIG. 5 shows the actuators 20 being actuated by the signal generator 30 in a pattern on the EAP surface 10. In the example shown in FIG. 5, the actuators 20 are being activated in a diagonal or zigzag pattern along the EAP surface 10. The signal generator 30 may be adapted to oscillate the actuators 20 in various patterns on the EAP surface 10 for the prevention and/or removal of ice on the EAP surface 10. For example, the signal generator 30 may oscillate the actuators 20 in a pattern of concentric circles, a checkerboard, or various other patterns as would be appreciated by one of ordinary skill in the art having the benefit of this disclosure.

FIG. 6 shows the actuation of a wrinkle or line actuator 40 on the EAP surface 10. The use of a wrinkle actuator 40 may be beneficial to prevent ice from forming on the EAP surface 10 and/or remove ice formed on the EAP surface 10 by breaking the bond between the ice and the EAP surface 10. A signal generator 30 may be used to actuate a single wrinkle actuator 40 on a first edge of the EAP surface 10 while the remaining non-actuated actuators 42 remained flat. The signal generator 30 may then actuate the next actuator 40 creating a wave that moves along the EAP surface 10. The wrinkle actuators 40 may also be actuated in a pattern along the EAP surface 10 by the signal generator 30.

The EAP surface 10 may include dimple actuators 50 (as shown in FIG. 7), bump actuators 20 (as shown in FIG. 3 - FIG. 5), and/or wrinkle actuators 40 (as shown in FIG. 6) and a combination of each of these actuators. The system may include a sensor 60 that detects the formation of ice on the EAP surface 10 or on an external surface of a vehicle or structure, such as the leading edges of an aircraft. The sensor 60 may be connected via line 32 to the signal generator 30 so that upon detection of the formation of ice the signal generator 30 may cause the oscillation of the actuators of the EAP surface 10 at various frequencies and in various patterns to break of the formation of ice. The EAP surface 10 may include an ice conditions sensor 70 that during environmental conditions that are conducive to the formation of ice causes the signal generator to oscillate the actuators to prevent the formation of ice. The ice conditions sensor 70 may be connected via line 32 to the signal generator 30 so that upon the detection of conditions conducive to the formation of ice the signal generator 30 may cause the oscillation of the actuators of the EAP surface 10 at various frequencies and in various patterns to prevent the formation of ice on the EAP surface 10. The ice sensor 60 and/or the ice conditions sensor 70 may be integral with the EAP surface 10.

As shown in FIG. 7, an aircraft 100 may include an airframe 118 with a plurality of systems 130 and an interior 122. Examples of high-level systems 130 include one or more of a propulsion system 134, an electrical system 136, a hydraulic system 138, and an environmental system 132. The airframe may also include various systems such as an ice prevention system. Examples of high-level elements of the ice prevention system 120 include an EAP system 110, a detection system 126, an electrical system 124, and a manual activation system 128. Any number of other systems may be included. Although an aerospace example is shown, the principles of the disclosure may be applied to other industries, such as the automotive industry, the construction industry, etc.

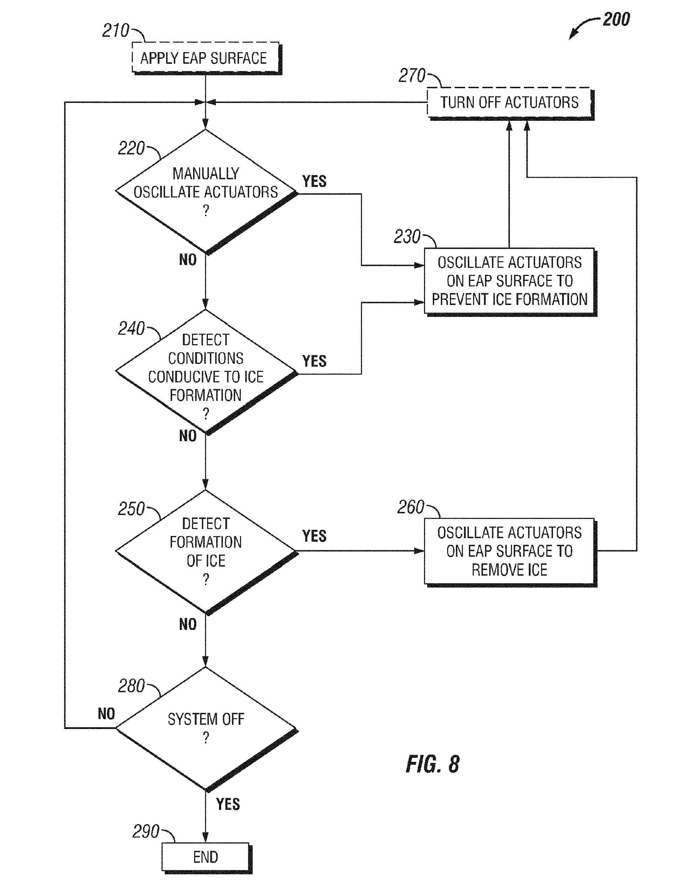

FIG. 8 illustrates an example of a method 200 for protecting an external surface from ice. In the illustrated embodiment, the method 200 begins with an optional first step 210, in which an EAP surface is applied to the external surface to be protected. In some cases, this first step 210 is unnecessary because, for example, the EAP surface is fabricated as an integral component of the external surface to be protected.

In a next step 220, the decision may be made to manually oscillate the actuators. If the decision is made to oscillate the actuators of the EAP surface, the actuators may be oscillated at step 230. The actuators may be oscillated under to control of a signal generator at various frequencies and in various patterns to prevent to formation of ice and/or remove the formation of ice from an external surface. The actuators may oscillate for a short period of time and the method may return to step 220. Optionally, the actuators may be turned off in step 270 and the method may return to step 220.

If the decision at step 220 is to not oscillate the actuators, the next step 240 is whether conditions conducive to the formation of ice are detected. In some embodiments, this detection step 240 is performed by a suitable environmental sensor, such as ice conditions sensor 70. When ice formation conditions are detected, in a next step 230, one or more actuators of the EAP surface are oscillated to prevent the formation of ice on the external surface. As described above, the actuators of the EAP surface can be oscillated under the control of a signal generator at various frequencies and in various patterns to prevent ice formation. The actuators may oscillate for a short period of time and the method may return to step 220. After oscillating the actuators at step 230, the actuators may optionally be turned off at step 270 and the process may return to step 220.

Although it is often desirable to prevent the formation of ice on the external surface, in some cases, ice may form despite the attempts to avoid it. In such cases, the method 200 may include a step 250, in which the formation of ice is detected by a suitable sensor, such as ice sensor 60. When ice is detected, in a next step 260, one or more actuators of the EAP surface are oscillated to remove the ice from the external surface. As described above, the actuators of the EAP surface can be oscillated under the control of a signal generator at various frequencies and in various patterns to remove ice form the external surface. The actuators may oscillate for a short period of time and the method may return to step 220. Optionally, the actuators may be turned off at step 270 after oscillating the actuators at step 260 and the process may return to step 220.

The method may include a next step to determine whether the ice prevention system has been turned off or remains on. If no formation of ice is detected and the system remains on at step 280, the method may return to step 220 to determine whether to manually oscillate the actuators. If no formation of ice is detected and the system has been turned off at step 280, then the method ends at step 290.

Although various embodiments have been shown and described, the present disclosure is not so limited and will be understood to include all such modifications and variations as would be apparent to one skilled in the art.

## Claims

1. A method of protecting an external surface from ice, the method comprising:
preventing the formation of ice on an external surface by oscillating (260) at least a portion of a plurality of actuators (20) on an electro-active polymer (EAP) surface (10).

2. The method of claim 1 further comprising applying (210) the EAP surface to the external surface.

3. The method of any preceding claim further comprising detecting conditions conducive to a formation of ice (240).

4. The method of claim 3 further comprising sending a signal to a signal generator (30) to oscillate at least the portion of the plurality of actuators (20) based on detecting conditions conducive to the formation of ice (240).

5. The method of any preceding claim wherein the external surface is a leading edge of an aircraft (100).

6. The method of any preceding claim further comprising oscillating each of the plurality of actuators (20) at the same frequency to prevent the formation of ice on the external surface (230).

7. The method of any preceding claim further comprising oscillating each of the plurality of actuators (20) at a frequency between about 1 Hz to about 1 kHz.

8. The method of any preceding claim, wherein the actuators (20) are dimple actuators, bump actuators, or wrinkle actuators.

9. The method of claim 1 further comprising individually oscillating a portion of the plurality of actuators (20) to form a pattern on the external surface to prevent the formation of ice on the external surface (230).

10. The method of claim 1 further comprising individually oscillating the plurality of actuators (20) to form a wave on the external surface to prevent the formation of ice on the external surface.

11. An ice protection system for an external surface comprising:
an electro-active polymer (EAP) surface (10) having a plurality of actuators (20); and
a signal generator (30) connected to the EAP surface (10), the signal generator (30) adapted to individually oscillate each of the plurality of actuators (20).

12. The system of claim 11, wherein the external surface comprises an external surface of a vehicle.

13. The system of any of claims 11 or 12, wherein the external surface is a leading edge of an aircraft (100).

14. The system of any of claims 11 to 13, wherein the plurality of actuators (20) are dimple actuators, bump actuators, or wrinkle actuators

15. The system of any of claims 11 to 14, wherein the signal generator (30) is adapted to oscillate the plurality of actuators (20) in a first mode to prevent the formation of ice (230) on the external surface of the aircraft (100) and to oscillate the plurality of actuators in a second mode to remove ice (260) formed on the external surface of the aircraft.
